# EUROPEAN PATENT APPLICATION

(11) **EP 4 550 788 A1**
(43) Date of publication of application: **07.05.2025**
(21) Application number: 23829790.7
(22) Date of filing: 19.05.2023
(51) Int. Cl.: H04N 19/42

(54) **VISUAL IMAGE DATA PROCESSING METHOD AND APPARATUS, AND RELATED DEVICE**

(30) Priority: 01.07.2022 CN 202210774919
(71) Applicant: China Telecom Corporation Limited, Beijing 100033 (CN)
(72) Inventor: WANG, Huifen, Beijing 100033 (CN)
(74) Representative: Petraz, Gilberto Luigi
(86) International application number: PCT/CN2023/095280
(87) International publication number: WO 2024/001604

(57) **Abstract**

The present disclosure provides a visual image data processing method and apparatus, an electronic device, and a medium. The method comprises: performing feature extraction on a captured image in a video to obtain image feature information, generating an image feature code stream according to the image feature information, and sending the image feature code stream to a cloud server; receiving position information sent by the cloud server, wherein the position information is generated by the cloud server according to the image feature code stream; extracting a region image according to the position information; and generating an image code stream according to the region image, and sending the image code stream to the cloud server. The present application improves the video compression rate and reduces the bandwidth pressure; a terminal device and a cloud server process an image at the same time, so that the computing load of the cloud server is reduced, and the real-time processing capability is improved.

## Description

### CROSS-REFERENCE TO RELATED APPLICATIONS

The present disclosure claims a priority to Chinese Patent Application No. 202210774919.0, filed on July 01, 2022, and entitled "VISUAL IMAGE DATA PROCESSING METHOD, DEVICE, ELECTRONIC APPARATUS AND MEDIUM", and the entire contents thereof are incorporated herein by reference.

### TECHNICAL FIELD

The present disclosure relates to the field of image processing technology, and in particular, to a visual image data processing method, device, electronic apparatus, computer readable storage, medium, and computer program product.

### BACKGROUND

With the rapid development of artificial intelligence technology, scenes such as smart city, intelligent transportation, and unmanned inspection have been widely applied. In such applications, visual images need to be captured. A terminal device captures a visual image and sends the captured visual image to a cloud server. The captured visual image generally needs to have a high pixel count, which in turn utilizes significant bandwidth for transmitting the visual image. Further, the captured visual image is generally subject to data processing at the cloud server, which can have a poor real-time processing capability.

It is to be noted that the information disclosed in the above-described background section is only used to enhance the understanding of the background of the present disclosure, and thus may include information that does not constitute the prior art known to a person skilled in the art.

### SUMMARY

The present disclosure provides a visual image data processing method, device, electronic apparatus, medium and computer program product, which overcome, to some extent at least, the problems of the large pressure on the bandwidth for transmitting the visual image and the poor real-time processing capability.

Other features and advantages of the present disclosure will become apparent from the following detailed description, or will be learned in part by the practice of the present disclosure.

An aspect of the present disclosure provides a visual image data processing method, applied to a terminal device, including:
obtaining image feature information by performing feature extraction on an image in a captured video, generating an image feature code stream based on the image feature information, and sending the image feature code stream to a cloud server;
receiving location information sent by the cloud server, wherein the location information is generated by the cloud server based on the image feature code stream;
extracting an area image based on the location information; and
generating an image code stream based on the area image and sending the image code stream to the cloud server.

In an embodiment of the present disclosure, obtaining the image feature information by performing the feature extraction on the image in the captured video, generating the image feature code stream based on the image feature information, and sending the image feature code stream to the cloud server includes:
generating the image feature information by performing the feature extraction on the image through a portion of layers of a first neural network mode; and
generating the image feature code stream by performing feature coding on the image feature information.
In an embodiment of the present disclosure, the cloud server generating the location information based on the image feature code stream includes:
the cloud server obtaining a decoded image feature by decoding the image feature code stream; and
the cloud server outputting a first prediction result through a remaining portion of layers of a first neural network model by using the decoded image feature as an input, the first prediction result including a first predicted target category and the location information.

In an embodiment of the present disclosure, the method further includes, after generating the image code stream based on the area image and sending the image code stream to the cloud server:
receiving new location information, the new location information being included in a second prediction result, the second prediction result further including a second predicted target category preset, and the second prediction result being generated by the cloud server based on a decoded image through a second neural network model; and
extracting an area image based on the new location information, generating an image code stream based on the area image, and sending the image code stream to the cloud server.
In an embodiment of the present disclosure, the method further includes, after generating the image code stream based on the area image and sending the image code stream to the cloud server:
receiving a request for obtaining an original image sent by the cloud server, the original image including a to-be-detected target.

Another aspect of the present disclosure provides a visual image data processing method, applied to a cloud server, including:
receiving an image feature code stream sent by a terminal device, the image feature code stream being generated based on image feature information, the image feature information being obtained by the terminal device performing feature extraction on an image in a captured video;
generating location information based on the image feature code stream, and sending the location information to the terminal device; and
receiving an image code stream sent by the terminal device, the image code stream being generated by the terminal device based on an area image, and the area image being extracted by the terminal device based on the location information.

In an embodiment of the present disclosure, generating the location information based on the image feature code stream, and sending the location information to the terminal device includes:
obtaining a decoded image feature by decoding the image feature code stream; and
outputting a first prediction result through a remaining portion of layers of a first neural network model by using the decoded image feature as an input, the first prediction result including a first predicted target category and the location information.

In an embodiment of the present disclosure, generating the location information based on the image feature code stream, and sending the location information to the terminal device includes:
querying whether the first predicted target category includes a first target category among N target categories preset in sequence, wherein N is a natural number;
if the first predicted target category does not include the first target category, ending; and
if the first predicted target category includes the first target category, sending the location information to the terminal device.

In an embodiment of the present disclosure, the method further includes, after receiving the image code stream sent by the terminal device:
determining whether the area image includes a to-be-detected target based on the image code stream.

In an embodiment of the present disclosure, determining whether the area image includes the to-be-detected target based on the image code stream includes:
obtaining a decoded image by decoding the image code stream;
outputting a second prediction result through a second neural network model by using the decoded image as an input, the second prediction result including a second predicted target category and new location information;
determining whether the second predicted target category includes an M^{th} target category among N target categories preset in sequence, where M is a number of times the second predicted target category is generated plus 1, and M is not greater than N;
if the second predicted target category includes the M^{th} target category, determining whether the second predicted target category is the same as the M^{th} target category; and
if the second predicted target category does not include the M^{th} target category, ending.
In an embodiment of the present disclosure, determining whether the second predicted target category is the same as the M^{th} target category includes:
if the second predicted target category is the same as the M^{th} target category, determining whether the second predicted target category is the same as the to-be-detected target, if the second predicted target category is the same as the to-be-detected target, outputting an indication indicating that the to-be-detected target has been found, and if the second predicted target category is different from the to-be-detected target, ending; and
if the second predicted target category is different from the M^{th} target category, sending the new location information to the terminal device to enable the terminal device to extract the area image based on the new location information.

In an embodiment of the present disclosure, the method further includes:
if the second predicted target category is the same as the to-be-detected target, sending a request for obtaining an original image to the terminal device.

Another aspect of the present disclosure provides a machine visual image data processing device, applied to a terminal device, including:
a feature extracting and coding module, configured to obtain image feature information by performing feature extraction on an image in a captured video, generate an image feature code stream based on the image feature information, and send the image feature code stream to a cloud server;
a terminal receiving module, configured to receive location information sent by the cloud server, wherein the location information is generated by the cloud server based on the image feature code stream;
an image extracting module, configured to extract an area image based on the location information; and
a processing module, configured to generate an image code stream based on the area image and send the image code stream to the cloud server.

Another aspect of the present disclosure provides a machine visual image data processing device, applied to a cloud server, including:
a cloud receiving module, configured to receive an image feature code stream sent by a terminal device, the image feature code stream being generated based on image feature information, the image feature information being obtained by the terminal device performing feature extraction on an image in a captured video; and
a location generating module, configured to generate location information based on the image feature code stream, and send the location information to the terminal device,
wherein the cloud receiving module is further configured to receive an image code stream sent by the terminal device, the image code stream being generated by the terminal device based on an area image, and the area image being extracted by the terminal device based on the location information.

Another aspect of the present disclosure provides an electronic device including:
a processor; and
a memory, storing executable instructions of the processor,
wherein the processor is configured to perform the above visual image data processing method by executing the executable instructions.

Another aspect of the present disclosure provides a computer-readable storage medium having stored thereon a computer program that, when being executed by a processor, implements the above visual image data processing method.

Another aspect of the present disclosure provides a computer program product including a computer program or computer instructions that, when being loaded and executed by a processor, cause a computer to implement any of the visual image data processing methods described above.

The embodiments of the present disclosure provide a visual image data processing method, device, electronic apparatus, medium and computer program product, in which a terminal device obtains image feature information by performing feature extraction on an image in a captured video and generates an image feature code stream based on the image feature information, a cloud server generates location information based on the image feature code stream, and the terminal device extracts an area image based on the location information, generates an image code stream based on the area image and sends the image code stream to the cloud server. As the terminal device performs the feature extraction on the image and generates the image feature code stream based on the image feature information, the compression ratio of the video is enhanced, which reduces the pressure on bandwidth. The terminal device and the cloud server process the image at the same time, which reduces the computation amount of the cloud server and thus improves the real-time processing capability.

It should be understood that the above general description and the following detailed description are merely exemplary and explanatory and do not limit the present disclosure.

### BRIEF DESCRIPTION OF THE DRAWINGS

The accompanying drawings herein are incorporated into and form a part of the specification, illustrate embodiments consistent with the present disclosure, and are used in conjunction with the specification to explain the principle of the present disclosure. Obviously, the accompanying drawings in the following description are only some of the embodiments of the present disclosure, and other accompanying drawings may be obtained from these drawings by a person skilled in the art without creative labor.
FIG. 1 illustrates a schematic diagram of an application system architecture in an embodiment of the present disclosure;
FIG. 2 illustrates a flowchart of a visual image data processing method in an embodiment of the present disclosure;
FIG. 3 illustrates a flowchart of a visual image data processing method in another embodiment of the present disclosure;
FIG. 4 illustrates a signaling diagram of a visual image data processing method in an embodiment of the present disclosure;
FIG. 5 illustrates a schematic diagram of a visual image data processing device in an embodiment of the present disclosure;
FIG. 6 illustrates a schematic diagram of a visual image data processing device in another embodiment of the present disclosure; and
FIG. 7 illustrates a structure block diagram of an electronic device in an embodiment of the present disclosure.

### DETAILED DESCRIPTION

Example implementations will now be described more fully with reference to the accompanying drawings. However, the example implementations can be implemented in a variety of forms and should not be construed as being limited to the examples set forth herein. Rather, these implementations are provided so that the present disclosure will be more comprehensive and complete, and the concept of the example implementations is conveyed to a person skilled in the art in a comprehensive manner. The described features, structures, or characteristics may be combined in one or more implementations in any suitable manner.

In addition, the accompanying drawings are only schematic illustrations of the present disclosure and are not necessarily to scale. The same reference numerals in the drawings indicate the same or similar parts, and thus repeated descriptions thereof will be omitted. Some of the block diagrams shown in the accompanying drawings are functional entities that do not necessarily have to correspond to physically or logically separate entities. These functional entities may be implemented in software form, or in one or more hardware modules or integrated circuits, or in different networks and/or processor devices and/or microcontroller devices.

Specific implementations of the embodiments of the present disclosure are described in detail below in conjunction with the accompanying drawings.

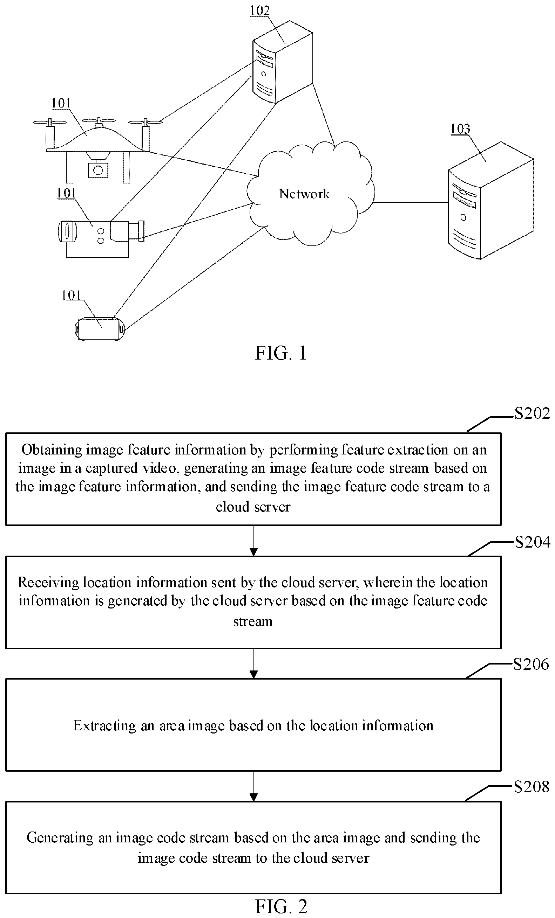

FIG. 1 illustrates a schematic diagram of an exemplary application system architecture to which the visual image data processing method in the embodiments of the present disclosure may be applied.

As shown in FIG. 1, the system architecture includes a terminal device and a cloud server 103, and the terminal device includes a video capturing device 101 for capturing video images and an image pre-processing device 102. The video capturing device 101 may be a drone, a camera, a mobile phone, or other types of devices with a video or image capturing capability. The video capturing device 101 is used to capture a video or image, and if the video capturing device 101 has an image pre-processing performance, the video capturing device 101 is connected to the cloud server 103 via a network so as to transmit the captured video or image after being pre-processing to the cloud server 103. The cloud server 103 is used to process the video or image which has been processed by the video capturing device 101. If the video capturing device 101 does not have the image pre-processing performance, the video capturing device 101 is connected to the cloud server 103 via the image pre-processing device 102. The image pre-processing device 102 is used to pre-process the captured video or image, and the image pre-processing device 102 may be a server providing various services, such as a backstage management server providing support to the video capturing device 101.

A person skilled in the art may know that the numbers of the video capturing devices 101, the image pre-processing devices 102, and the cloud servers 103 in FIG. 1 are merely schematic, and according to the actual need, there may be any numbers of the video capturing devices 101, the image pre-processing devices 102, and the cloud servers 103, which is not specifically limited in the present disclosure.

The network for connecting the image pre-processing device 102 and the cloud server 103 and the network for connecting the video capturing device 101 and the cloud server 103 may be a wired network or a wireless network.

In some embodiments, the wireless network or wired network described above uses a standard communication technology and/or protocol. The network is typically the Internet, but may be any network including, but not limited to, a Local Area Network (LAN), a Metropolitan Area Network (MAN), a Wide Area Network (WAN), a mobile, wired or wireless network, a private network, a virtual private networks or any combination thereof. In some embodiments, the data exchanged over the network is represented using technologies and/or formats including Hyper Text Mark-up Language (HTML), Extensible Markup Language (XML), and the like. In addition, a conventional encryption technique such as Secure Socket Layer (SSL), Transport Layer Security (TLS), Virtual Private Network (VPN), Internet Protocol Security (IPsec) and the like may also be used to encrypt all or some links. In some other embodiments, a customized and/or specialized data communication technique may also be used instead of or in addition to the data communication technique described above.

The cloud server 103 may be a stand-alone physical server, or may be a server cluster or distributed system including a plurality of physical servers, or may also be a cloud server providing cloud service, cloud database, cloud computing, cloud function, cloud storage, network service, cloud communication, middleware service, domain name service, security service, CDN (Content Delivery Network Network), and basic cloud computing service such as big data and artificial intelligence platform.

An embodiment of the present disclosure provides a visual image data processing method, in which a terminal device obtains image feature information by performing feature extraction on an image in a captured video, generates an image feature code stream based on the image feature information, and sends the image feature code stream to a cloud server 103, the cloud server 103 generates location information based on the image feature code stream, and the terminal device extracts an area image based on the location information, generates an image code stream based on the area image and sends the image code stream to the cloud server 103. The method may be applied in the scenarios of power inspection, base station inspection, emergency rescue, field research, monitoring of farm and ranch, and filming by unmanned aerial vehicle to perform data processing on a captured video or image, thereby satisfying the purpose of people for shooting.

In some embodiments, the visual image data processing method provided in the embodiments of the present disclosure may be executed in the terminal device and the cloud server 103 shown in FIG. 1.

FIG. 2 illustrates a flowchart of a visual image data processing method in an embodiment of the present disclosure. As shown in FIG. 2, the visual image data processing method provided in the embodiment of the present disclosure is applied to a terminal device, and includes the following steps.

In S202, image feature information is obtained by performing feature extraction on an image in a captured video, an image feature code stream is generated based on the image feature information, and the image feature code stream is sent to a cloud server.

The terminal device captures a video or an image. If a video is captured, the terminal device extracts a frame from the captured video and writes the extracted image to an image queue. The terminal device may obtain the image feature information by performing the feature extraction on the image through a neural network model, and generate the image feature code stream by encoding the image feature information. When transmitting the image, only the encoded image feature information is transmitted, which reduces the data volume for transmitting the visual image, and thus reduces the pressure on bandwidth caused by the visual image transmission.

In S204, location information sent by the cloud server is received, wherein the location information is generated by the cloud server based on the image feature code stream.

The location information is location information of an area image to be extracted. The location information may be a collection of a number of coordinate points, according to which the location of the area image may be determined. The location information may also be a combination of a number of coordinate points and image edge information, according to which the location of the area image is determined. The image edge information may be a width of the image or a length of the image, and the location of the area image is determined using the coordinate points in conjunction with the width of the image, or using the coordinate points in conjunction with the length of the image.

In S206, an area image is extracted based on the location information.

After receiving the location information sent by the cloud server, the terminal device extracts the area image based on the location information. The size of the area image is smaller than the size of the image, which may be 5%-50% of the area size of the image. A to-be-detected target is contained within the area image, and the relative size of the to-be-detected target to the area image is larger than that of the to-be-detected target to the image, which is conducive to accurately locating and capturing the to-be-detected target. The to-be-detected target is a target image to be extracted. In addition, the relative size of the area image to the image is relatively small, which may reduce the data volume for transmitting the visual image, and further reduce the pressure on bandwidth caused by image transmission.

In S208, an image code stream is generated based on the area image, and the image code stream is sent to the cloud server.

The terminal device generates the image code stream by encoding the area image, and the cloud server decodes the image code stream and determines whether the decoded area image is the same as the to-be-detected target. The terminal device and the cloud server continuously interact with each other, so that a desired result is obtained, for example, in an unmanned inspection project of the power grid, a result that a vibration damper is damaged or undamaged may be obtained.

In the related art, a machine vision task for a small target often requires defining a target area repeatedly, so cascaded machine vision tasks are performed, in which scenarios, the captured image generally needs to meet a characteristic of high pixel counts, which in turn brings a large pressure on the bandwidth for transmitting the video. Further, the transmitted video is subject to calculating and processing at the cloud server, however the cloud server has a limited computing capability, and thus when there is a large data volume to be processed, the real-time processing capability is reduced, which affects the operating efficiency.

In the present disclosure, as the terminal device performs the feature extraction on the image and generates the image feature code stream based on the image feature information, the compression ratio of the video is enhanced, which reduces the pressure on bandwidth. The terminal device and the cloud server process the image coordinately at the same time, which reduces the computation amount of the cloud server and thus improves the real-time processing capability.

In some embodiments, obtaining the image feature information by performing the feature extraction on the image in the captured video, generating the image feature code stream based on the image feature information, and sending the image feature code stream to the cloud server includes:

generating the image feature information by performing the feature extraction on the image through a portion of layers of a first neural network mode; and
generating the image feature code stream by performing feature coding on the image feature information.

The first neural network model may be a deep convolutional neural network (DCNN) model, a generative adversarial network (GAN) model, a Cascade R-CNN model, or other models that can perform the image feature extraction.

For example, the terminal device generates the image feature information by performing the feature extraction on the image through a stem layer of resneXt101 of the Cascade RCNN ResneXt101 FPN model, and generates the image feature stream by encoding the image feature information through a feature encoding method, which may be one of an All Intra (AI) encoding, cluster quantization and entropy encoding.

In some embodiments, the cloud server generating the location information based on the image feature code stream includes:
the cloud server obtaining a decoded image feature by decoding the image feature code stream; and
the cloud server outputting a first prediction result through a remaining portion of layers of a first neural network model by using the decoded image feature as an input, the first prediction result including a first predicted target category and the location information.

The first predicted target category is preset within the cloud server, and the location information is used to determine a location of the area image, which facilitates the terminal device to extract the area image based on the location information.

For example, the decoded image feature is input as an input to a network layer after the stem layer of the Cascade RCNN ResneXt101 FPN model, which outputs a first prediction result. The first prediction result includes the first predicted target category and the location information, and the location information may be expressed in the form of a set of coordinates.

In some embodiments, obtaining the image feature information by performing the feature extraction on the image in the captured video, generating the image feature code stream based on the image feature information, and sending the image feature code stream to the cloud server includes:
generating an image by performing a frame extraction on the captured video;
writing the image to an image queue; and
performing the feature extraction on the image written to the image queue.

For generation the image, the terminal device captures the video, extracts a frame from the video, generates a plurality of images, and writes the images to the image queue, the images located in the image queue are popped out of stack sequentially, and the terminal device performs the feature extraction on the popped image.

In some embodiments, after generating the image code stream based on the area image and sending the image code stream to the cloud server, the method further includes:
receiving new location information, the new location information being included in a second prediction result, the second prediction result further comprising a second predicted target category preset, and the second prediction result being generated by the cloud server based on a decoded image through a second neural network model; and
extracting the area image based on the new location information, generating the image code stream based on the area image, and sending the image code stream to the cloud server.

It is to be noted that the cloud server obtains the decoded image by decoding the image code stream, and outputs the second prediction result using the decoded image as an input to the second neural network model, and the second prediction result includes the new location information.

In some embodiments, after generating the image code stream based on the area image and sending the image code stream to the cloud server, the method further includes:
receiving a request for obtaining an original image sent by the cloud server, the original image includes a to-be-detected target.

It is to be noted that when the second predicted target category is the same as the to-be-detected target, in order to verify or display the original image, the cloud server sends the request for obtaining the original image to the terminal device.

Based on the same inventive concept, an embodiment of the present disclosure also provides a visual image data processing method as described in the following embodiments. Since the principle of the method embodiment for solving problem is similar to that of the above method embodiment, the implementation of the method embodiment may be referred to the implementation of the above method embodiment, and thus repeated descriptions thereof will be omitted.

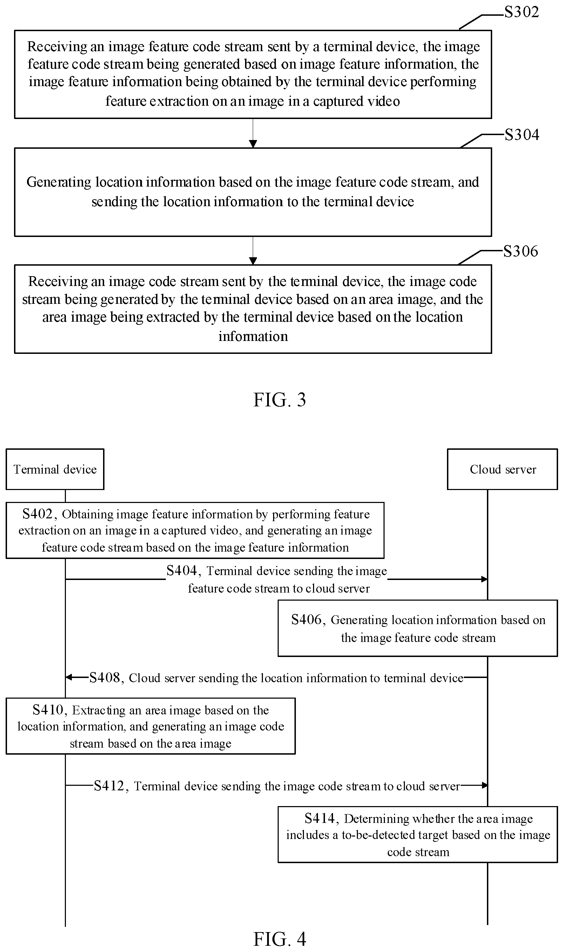

FIG. 3 illustrates a flowchart of a visual image data processing method in another embodiment of the present disclosure. As shown in FIG. 3, the visual image data processing method provided in the embodiment of the present disclosure is applied to a cloud server, and includes:

S302, receiving an image feature code stream sent by a terminal device, the image feature code stream being generated based on image feature information, the image feature information being obtained by the terminal device performing feature extraction on an image in a captured video;

S304, generating location information based on the image feature code stream, and sending the location information to the terminal device; and

S306, receiving an image code stream sent by the terminal device, the image code stream being generated by the terminal device based on an area image, and the area image being extracted by the terminal device based on the location information.

In some embodiments, generating the location information based on the image feature code stream, and sending the location information to the terminal device comprises:
obtaining a decoded image feature by decoding the image feature code stream; and
outputting a first prediction result through a remaining portion of layers of a first neural network model by using the decoded image feature as an input, the first prediction result including a first predicted target category and the location information.

In some embodiments, generating the location information based on the image feature code stream, and sending the location information to the terminal device includes:
querying whether the first predicted target category includes a first target category among N target categories preset in sequence, wherein N is a natural number;
if the first predicted target category does not include the first target category, ending; and
if the first predicted target category includes the first target category, sending the location information to the terminal device.

It is to be noted that the cloud server needs to obtain the first predicted target category that contains the first target category, and if the first predicted target category generated does not contain the first target category, it means that the first target category is not in the captured image, and thus the to-be-detected target is not in the captured image, so that the terminal device needs to adjust the position or shooting angle to re-capture the video, and the terminal device obtains a new image by performing the frame extraction on the video.

As an example, for example, in an emergency rescue scenario, to query whether the arm of a person is injured, the preset first target category is a person, and if the first predicted target category contains a person, it extracts the area image, i.e., the arm area of the person, and if the first predicted target category does not contain a person, it needs to re-capture a video image.

In some embodiments, after receiving the image code stream sent by the terminal device, the method further includes:
determining whether the area image includes a to-be-detected target based on the image code stream.

In some embodiments, determining whether the area image includes the to-be-detected target based on the image code stream comprises:
obtaining a decoded image by decoding the image code stream;
outputting a second prediction result through a second neural network model by using the decoded image as an input, the second prediction result including a second predicted target category and new location information;
determining whether the second predicted target category includes an M^{th} target category among N target categories preset in sequence, where M is a number of times the second predicted target category is generated plus 1, and M is not greater than N;
if the second predicted target category includes the M^{th} target category, determining whether the second predicted target category is the same as the M^{th} target category;
if the second predicted target category is the same as the M^{th} target category, determining whether the second predicted target category is the same as the to-be-detected target;
if the second predicted target category is the same as the to-be-detected target, outputting an indication indicating that the to-be-detected target has been found;
if the second predicted target category is different from the to-be-detected target, ending;
if the second predicted target category is different from the M^{th} target category, sending the new location information to the terminal device to enable the terminal device to extract the area image based on the new location information; and
if the second predicted target category does not includes the M^{th} target category, ending.

It is to be noted that a plurality of target categories may be preset in the cloud server, and the preset plurality of target categories are represented here by N target categories, where N is defined as required. The N target categories are preset so that the extracted area image is reduced gradually, so as to obtain a small target, i.e., the to-be-detected target, from a larger image. In the machine vision, the small target may be defined in two ways, one way is to define the small target in a relative size, for example, when the length and width of the target is 0.1 of the size of the original image, the target can be regarded as the small target; and the other way is to define the small target in an absolute size, that is, when the size of the target is less than 32 * 32 pixels, the target can be regarded as the small target.

It is to be noted that the second neural network model may be a deep convolutional neural network (DCNN) model, a generative adversarial network (GAN) model, a Cascade R-CNN model, or other models that can perform the image feature extraction. The second target category is included within the second predicted target category and the second target category is different from the second predicted target category, therefore, the second predicted target category which is the same as the to-be-detected target is obtained in a decrement manner, so that the locating of the second predicted target category which is the same as the to-be-detected target is more accurate.

It is to be noted that the cloud server may request area images with different encoding levels while sending the new location information.

For example, if the second predicted target category includes the to-be-detected target but is different from the to-be-detected target, when the new location information is sent to the terminal device, the encoding quantization level of the area image to be extracted may be sent also to satisfy the different definitions of the area image. For example, when the new location information is sent for the first time, the encoding quantization level of the area image sent incidentally is 37, and when the new location information is sent for the second time, the encoding quantization level of the area image sent incidentally is 27. For example, the decoded image is into the Cascade RCNN ResneXt101 FPN model as an input, and then the second predicted target category is outputted. The size of the second predicted target category is smaller than the size of the first predicted target category, which may be 5%-50% of the area size of the first predicted target category, the to-be-detected target is included in the second predicted target category, the relative size of the to-be-detected target to the second predicted target category is larger than that of the to-be-detected target to the first predicted target category, which is conducive to accurately capturing the to-be-detected target. In addition, the size of the second predicted target category is smaller than that of the first predicted target category, which may reduce the data volume for transmitting the visual image, and further reduce the pressure on bandwidth caused by image transmission.

The above embodiment is described in the following four cases.

In a first case, the second predicted target category does not include the second target category.

The cloud server obtains the decoded image by decoding the image code stream for the first time; generates the second predicted target category and the new location information through the second neural network model, in which M is 2; and determines whether the second predicted target category includes the second target category, and if not including, it means that there is no to-be-detected target.

As an example, for example, in an emergency rescue scenario, when it queries whether the arm of a person wearing red clothe is injured, the first target category may be a person, the second target category may be a person wearing red clothe, the area image is a person image, and if there is no person wearing red clothe in the second predicted target category, it means that the second predicted target category does not include the second target category, i.e., there is no person wearing red clothe, and the process ends.

In a second case, the second predicted target category includes the second target category, the second predicted target category is the same as the second target category, and the second predicted target category is the same as the to-be-detected target.

The cloud server obtains the decoded image by decoding the image code stream for the first time; generates the second predicted target category and the new location information through the second neural network model, in which M is 2; determines whether the second predicted target category includes the second target category; if including, it means that there is the to-be-detected target in the area image, then determines whether the second predicted target category is the same as the second target category; if the same, then determines whether the second predicted target category is the same as the to-be-detected target; and if the same, outputs an indication indicating that the to-be-detected target has been found. The indication may be output in the form of an alarm, such as a buzzer, an indicator light, a prompt box, or the like, to indicate that the to-be-detected target has been found.

As an example, for example, in an emergency rescue scenario, when it queries whether the arm of a person is injured, the to-be-detected target is an injured arm, the first target category may be a person, the second target category may be an arm, including an injured arm and an uninjured arm, the area image is a person image, and if there is an injured arm in the second predicted target category, it means that the second predicted target category includes the second target category, and the second predicted target category is the same as the second target category, both of which are arms, then it determines whether the second predicted target category is the same as the to-be-detected target, the second predicted target category is the injured arm, which is the same as the injured arm of the to-be-detected target, and an indication indicating that the to-be-detected target has been found is output, which is easy for the staff to find.

In a third case, the second predicted target category includes the second target category, the second predicted target category is the same as the second target category, and the second predicted target category is not the same as the to-be-detected target.

The cloud server obtains the decoded image by decoding the image code stream for the first time; generates the second predicted target category and the new location information through the second neural network model, in which M is 2; determines whether the second predicted target category includes the second target category; if including, it means that there is the to-be-detected target in the area image, then determines whether the second predicted target category is the same as the second target category; if the same, then determines whether the second predicted target category is the same as the to-be-detected target; and if the second predicted target category is not the same as the to-be-detected target, the process ends.

As an example, for example, in an emergency rescue scenario, when it queries whether the arm of a person is injured, the to-be-detected target is an injured arm, the first target category may be a person, the second target category may be an arm, including an injured arm and an uninjured arm, the area image is a person image, and if there is an injured arm in the second predicted target category, it means that the second predicted target category includes the second target category, and the second predicted target category is the same as the second target category, both of which are arms, then it determines whether the second predicted target category is the same as the to-be-detected target, the second predicted target category is the arm, and all arms are not injured, which is different from the injured arm of the to-be-detected target, it indicates that no person is injured, and thus the process ends.

In a fourth case, the second predicted target category includes the second target category, and the second predicted target category is not the same as the second target category.

The cloud server obtains the decoded image by decoding the image code stream for the first time; generates the second predicted target category and the new location information through the second neural network model, in which M is 2; determines whether the second predicted target category includes the second target category; if including, it means that there is the to-be-detected target in the area image, then determines whether the second predicted target category is the same as the second target category; and if not the same, sends the new location information to the terminal device to enable the terminal device to extract the area image based on the new location information, so that the area image is extracted in a decrement manner, that is, the ranges of several target categories are reduced sequentially, which may be the reduction of the image area, and the cloud server generates the new location information based on the decoded image so that the area image with a smaller range is re-extracted.

As an example, for example, in an emergency rescue scenario, when it queries whether the arm of a person is injured, the preset first target category may be a person, the preset second target category may be the arm of the person, the to-be-detected target is an injured forearm, and if the second predicted target category is a person but is different from the second target category, the area image is re-extracted, that is, the arm of the person is extracted. The cloud server determines the new location information based on the second predicted target category and sends the location information to the terminal device so as to re-extract the area image with a smaller range. The terminal device re-extracts the area image, performs encoding on the area image, and sends the generated image code stream to the cloud server. The cloud server generates the decoded image by decoding the image code stream, the decoded image is the arm of the person, the second predicted target category obtained based on the decoded image is the arm of the person, and the second predicted target category is the same as the second target category. By regenerating the location information, the area image to be extracted is reduced, so that the to-be-detected target is found, which achieves the accurate locating of the to-be-detected target.

In some embodiments, the method further includes:
if the second predicted target category is the same as the to-be-detected target, sending a request for obtaining an original image to the terminal device.

It is to be noted that after determining that the second predicted target category is the same as the to-be-detected target, sometimes it is necessary to obtain the original image for verification, display or the like, then the cloud server may send a request for obtaining the original image to the terminal device.

In case where the second predicted target category includes the to-be-detected target but is different from the to-be-detected target, when the location information of the M^{th} target category is sent to the terminal device, the encoding quantization level of the area image of the M^{th} target category may be sent also to satisfy the different definitions of the area image. For example, when the location information of the first target category is sent, the encoding quantization level of the area image of the first target sent incidentally is 37, and when the location information of the second target category is sent, the encoding quantization level of the area image of the second target sent incidentally is 27.

FIG. 4 illustrates a signaling diagram of a visual image data processing method in an embodiment of the present disclosure. As shown in FIG. 4, the method specifically includes:
S402, obtaining image feature information by performing feature extraction on an image in a captured video, and generating an image feature code stream based on the image feature information;
S404, a terminal device sending the image feature code stream to a cloud server;
S406, generating location information based on the image feature code stream;
S408, the cloud server sending the location information to the terminal device;
S410, extracting an area image based on the location information, and generating an image code stream based on the area image;
S412, the terminal device sending the image code stream to the cloud server; and
S414, determining whether the area image includes a to-be-detected target based on the image code stream.

For example, in the unmanned inspection of a power grid, the preset first target category is a suspension clamp, the preset second target category is a suspension clamp with a missing cotter pin, and the to-be-detected target is the suspension clamp with the missing cotter pin.

A terminal device (i.e., a drone or an edge node) extracts a frame from a captured video, writes the extracted image to an image queue, performs feature extraction on the image in the image queue through a Cascade RCNN ResneXt101 FPN model in which the feature extraction layer is a stem layer of resneXt101, generates an image feature code stream by encoding the extracted image feature information in which the feature encoding method is entropy encoding, or the feature images may be spliced into an image to be put into an existing encoder (e.g., VTM12.0, AI encoding, or the like).

A cloud server receives the image feature code stream sent by the terminal device and obtain a decoded image feature by decoding the image feature code stream, and outputs a first predicted target category and location information through a network layer after the stem layer of the Cascade RCNN ResneXt101 FPN model by using the decoded image feature as an input. If the first predicted target category does not include the suspension clamp, the cloud server directly proceeds to the processing of a next image feature stream until the generated first predicted target category includes the suspension clamp; and if the first predicted target category includes the suspension clamp and the first predicted target category is different from the first target category, the cloud server determines the location information of the preset first target category based on the first predicted target category. The cloud server sends the location information to the terminal device, and the location information is the location of the detected suspension clamp. The terminal device extracts an area image of the suspension clamp based on the location information, generates an image code stream by performing image encoding on the area image, and sends the image code stream to the cloud server. Since more than one suspension clamps may be detected, there may be more than one area images.

After receiving the image code stream, the cloud server obtains a plurality of decoded images by decoding the image code stream, and the decoded image is the area image of the suspension clamp. A second predicted target category and new location information are output through the Cascade RCNN ResneXt101 FPN model by using the decoded image as an input, and there may be more than one outputted second predicted target categories. The cloud server determines whether the second predicted target category is the same as the to-be-detected target, if the same, it indicates that the suspension clamp with the missing cotter pin has been inspected. In case where the original image information is required for verification, display, or the like, the cloud server interacts with the terminal device to obtain the original image.

In addition, during the unmanned inspection of the power grid, it may inspect a vibration damper, a tower, an umbrella skirt, and a suspension clamp at the same time. The vibration damper, tower, umbrella skirt, and suspension clamp may be used as the preset first target category at the same time, and the vibration damper, tower, umbrella skirt, and suspension clamp each with a possible defect may be commonly used as the second target category, so as to realize a more highly-efficient inspection.

The present disclosure may determine a small to-be-detected target through the interaction between the cloud server and the terminal device, which can achieve accurate positioning and may not bring pressure to the bandwidth.

For example, in a scenario of searching for a lost object, the to-be-detected target is a ring with marker and the ring with marker is worn on a hand of a person, the first target category is a person, the second target category is a hand, and the third target category is a ring. A terminal device (i.e., a drone or an edge node) extracts a frame from a captured video, writes the extracted image to an image queue, performs feature extraction on the image in the image queue through a Cascade RCNN ResneXt101 FPN model in which the feature extraction layer is a stem layer of resneXt101, generates an image feature code stream by encoding the extracted image feature information in which the feature encoding method is entropy encoding, or the feature images may be spliced into an image to be put into an existing encoder (e.g., VTM12.0, AI encoding, or the like).

A cloud server receives the image feature code stream sent by the terminal device and obtain a decoded image feature by decoding the image feature code stream, and outputs a first predicted target category and location information through a network layer after the stem layer of the Cascade RCNN ResneXt101 FPN model by using the decoded image feature as an input. The first predicted target category is a person and the first predicted target category is different from the to-be-detected target, then the cloud server sends new location information to the terminal device. The terminal device re-extracts the area image based on the new location information, and generates the image code stream by encoding the area image. The cloud server receives the image code stream sent by the terminal device and obtain a decoded image by decoding the image code stream, and outputs a new second predicted target category and new location information through the Cascade RCNN ResneXt101 FPN model by using the decoded image as an input. The new second predicted target category is a hand, and if the hand has a high definition, the cloud server may extract a ring worn on the hand based on the hand, so as to determine whether the ring is the same as the to-be-detected target.

It is to be noted that the cloud server may determine whether the cloud server and the terminal device may interact with each other based on the definition of the output second predicted target category, and if the definition is high, the cloud server may extract the to-be-detected target, which may be an extraction in a decrement manner; and if the definition is low, the cloud server sends new location information to the terminal device, which extracts the area image which includes the to-be-detected target.

Based on the same inventive concept, an embodiment of the present disclosure also provides a machine visual image data processing device as described in the following embodiments. Since the principle of the system embodiment for solving problem is similar to that of the above method embodiment, the implementation of the system embodiment may be referred to the implementation of the above method embodiment, and thus repeated descriptions thereof will be omitted.

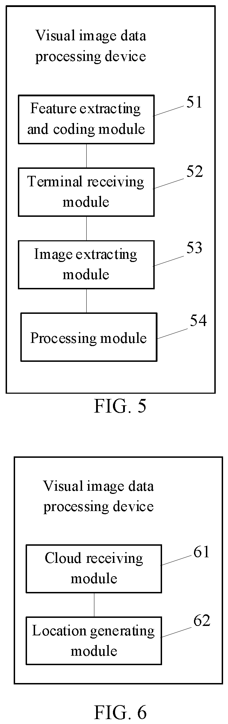

FIG. 5 illustrates a schematic diagram of a visual image data processing device in an embodiment of the present disclosure. As shown in FIG. 5, the device includes a feature extracting and coding module 51, a terminal receiving module 52, an image extracting module 53, and a processing module 54.

The feature extracting and coding module 51 is configured to obtain image feature information by performing feature extraction on an image in a captured video, generate an image feature code stream based on the image feature information, and send the image feature code stream to a cloud server.

The terminal receiving module 52 is configured to receive location information sent by the cloud server, wherein the location information is generated by the cloud server based on the image feature code stream.

The image extracting module 53 is configured to extract an area image based on the location information.

The processing module 54 is configured to generate an image code stream based on the area image and send the image code stream to the cloud server.

It is to be noted herein that the above feature extracting and coding module 51, terminal receiving module 52, image extracting module 53, and processing module 54 correspond to S202 to S208 in the method embodiments. The implemented examples and applied scenarios of the above modules and corresponding steps thereto are the same, which however are not limited to that disclosed in the method embodiments. It is to be noted that the above modules as part of the device may be executed in a computer system such as a set of computer executable instructions.

In some embodiments of the present disclosure, the feature extracting module 51 is configured to:
generate the image feature information by performing the feature extraction on the image through a portion of layers of a first neural network mode; and
generate the image feature code stream by performing feature coding on the image feature information.

In some embodiments of the present disclosure, the cloud server generating the location information based on the image feature code stream includes:
the cloud server obtaining a decoded image feature by decoding the image feature code stream; and
the cloud server outputting a first prediction result through a remaining portion of layers of a first neural network model by using the decoded image feature as an input, the first prediction result including a first predicted target category and the location information.

In some embodiments of the present disclosure, the feature extracting and coding module 51 is further configured to:
generate an image by performing a frame extraction on the captured video;
write the image to an image queue; and
perform the feature extraction on the image written to the image queue

In some embodiments of the present disclosure, the terminal receiving module 52 is further configured to: receive new location information, the new location information being included in a second prediction result, the second prediction result further including a second predicted target category preset, and the second prediction result being generated by the cloud server based on a decoded image through a second neural network model; and the image extracting module 53 is configured extract the area image based on the new location information, generate the image code stream based on the area image, and send the image code stream to the cloud server.

In some embodiments of the present disclosure, the terminal receiving module 52 is further configured to receive a request for obtaining an original image sent by the cloud server, the original image including a to-be-detected target.

Based on the same inventive concept, another embodiment of the present disclosure also provides a machine visual image data processing device as described in the following embodiments. Since the principle of the system embodiment for solving problem is similar to that of the above method embodiment, the implementation of the system embodiment may be referred to the implementation of the above method embodiment, and thus repeated descriptions thereof will be omitted.

FIG. 6 illustrates a schematic diagram of a visual image data processing device in another embodiment of the present disclosure. As shown in FIG. 6, the device includes a cloud receiving module 61 and a location generating module 62.

The cloud receiving module 61 is configured to receive an image feature code stream sent by a terminal device, the image feature code stream being generated based on image feature information, the image feature information being obtained by the terminal device performing feature extraction on an image in a captured video.

The location generating module 62 is configured to generate location information based on the image feature code stream, and send the location information to the terminal device.

The cloud receiving module 61 is further configured to receive an image code stream sent by the terminal device, the image code stream being generated by the terminal device based on an area image, and the area image being extracted by the terminal device based on the location information.

It is to be noted herein that the above cloud receiving module 61 and location generating module 62 correspond to S302 to S306 in the method embodiments. The implemented examples and applied scenarios of the above modules and corresponding steps thereto are the same, which however are not limited to that disclosed in the method embodiments. It is to be noted that the above modules as part of the device may be executed in a computer system such as a set of computer executable instructions.

In some embodiments of the present disclosure, the cloud receiving module 61 includes a sub-receiving module and a decoding module which are not shown in the figure.

The sub-receiving module is configured to receive the image code stream sent by the terminal device.

The decoding module is configured to obtain a decoded image feature by decoding the image feature code stream; and output a first prediction result through a remaining portion of layers of a first neural network model by using the decoded image feature as an input, the first prediction result including a first predicted target category and the location information.

In some embodiments of the present disclosure, the location generating module 62 is configured to:
query whether the first predicted target category includes a first target category among N target categories preset in sequence, wherein N is a natural number;
if the first predicted target category does not include the first target category, end; and
if the first predicted target category includes the first target category, send the location information to the terminal device.

In some embodiments of the present disclosure, the location generating module 62 is further configured to determine whether the area image includes a to-be-detected target based on the image code stream.

In some embodiments of the present disclosure, the location generating module 62 is further configured to:
obtain a decoded image by decoding the image code stream;
output a second prediction result through a second neural network model by using the decoded image as an input, the second prediction result including a second predicted target category and new location information;
determine whether the second predicted target category includes an M^{th} target category among N target categories preset in sequence, where M is a number of times the second predicted target category is generated plus 1, and M is not greater than N;
if the second predicted target category includes the M^{th} target category, determine whether the second predicted target category is the same as the M^{th} target category; and
if the second predicted target category does not include the M^{th} target category, end.

In some embodiments of the present disclosure, the location generating module 62 is further configured to:
determine whether the second predicted target category is the same as the M^{th} target category comprises:
if the second predicted target category is the same as the M^{th} target category, determine whether the second predicted target category is the same as the to-be-detected target,
if the second predicted target category is the same as the to-be-detected target, output an indication indicating that the to-be-detected target has been found;
if the second predicted target category is different from the to-be-detected target, end; and
if the second predicted target category is different from the M^{th} target category, send the new location information to the terminal device to enable the terminal device to extract the area image based on the new location information.

In some embodiments of the present disclosure, the location generating module 62 is further configured to: if the second predicted target category is the same as the to-be-detected target, send a request for obtaining an original image to the terminal device.

A person skilled in the art may understand that various aspects of the present disclosure may be implemented as a system, method, or program product. Accordingly, various aspects of the present disclosure may be specifically realized in the form of a complete hardware implementation, a complete software implementation (including firmware, microcode, etc.), or a combination implementation of hardware and software, which may be collectively referred to herein as a "circuit", "module", or "system".

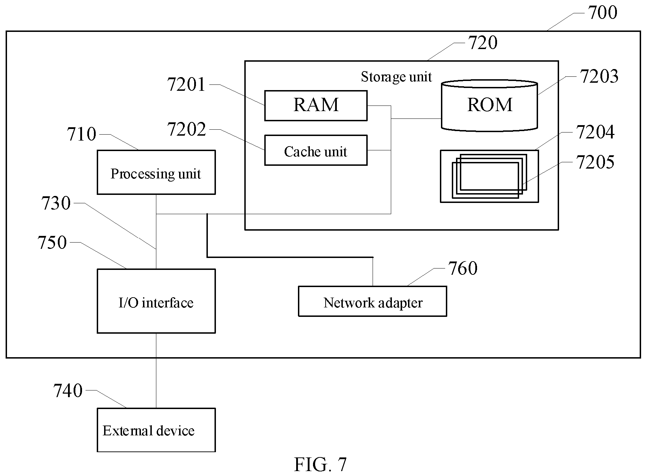

An electronic device 700 according to such implementation of the present disclosure is described below with reference to FIG. 7. The electronic device 700 shown in FIG. 7 is merely an example, and should not impose any limitations on the functionality and use scope of the embodiments of the present disclosure.

As shown in FIG. 7, the electronic device 700 is represented in the form of a general computing device. The components of the electronic device 700 may include, but are not limited to: at least one processing unit 710 as described above, at least one storage unit 720 as described above, and a bus 730 connecting different system components (including the storage unit 720 and the processing unit 710).

The memory unit stores program code, the program code may be executed by the processing unit 710, causing the processing unit 710 to perform the steps described in the above-described `exemplary methods' in the specification according to various exemplary implementations of the present disclosure. For example, the processing unit 710 may perform the following steps in the method embodiment: obtaining image feature information by performing feature extraction on an image in a captured video, generating an image feature code stream based on the image feature information, and sending the image feature code stream to a cloud server; receiving location information sent by the cloud server, wherein the location information is generated by the cloud server based on the image feature code stream; extracting an area image based on the location information; and generating an image code stream based on the area image and sending the image code stream to the cloud server.

The processing unit 710 may perform the following steps in the method embodiment: receiving an image feature code stream sent by a terminal device, the image feature code stream being generated based on image feature information, the image feature information being obtained by the terminal device performing feature extraction on an image in a captured video; generating location information based on the image feature code stream, and sending the location information to the terminal device; and receiving an image code stream sent by the terminal device, the image code stream being generated by the terminal device based on an area image, and the area image being extracted by the terminal device based on the location information.

The storage unit 720 may include a readable medium in the form of a volatile storage unit, such as a random access memory unit (RAM) 7201 and/or a cache unit 7202, and may further include a read-only storage unit (ROM) 7203.

The storage unit 720 may also include a program/utility tool 7204 having a set (at least one) of program modules 7205, and such program module 7205 may include, but not limited to: an operating system, one or more applications, other program modules, and program data, and each of these examples or some combination thereof may include an implementation of a network environment.

The bus 730 may represent one or more of several types of bus structures, including a memory unit bus or memory unit controller, a peripheral bus, a graphics acceleration port, a processing unit, or a local area bus using any of a variety of bus structures.

The electronic device 700 may also be in communication with one or more external devices 700 (e.g., a keyboard, a pointing device, a Bluetooth device, etc.), and may also be in communication with one or more devices that enable a user to interact with the electronic device 700, and/or may be in communication with any device (e.g., a router, a modem, etc.) that enables the electronic device 700 to communicate with one or more other computing devices. Such communication may be carried out via the input/output (I/O) interface 750. And, the system may also communicate with one or more networks (e.g., a local area network (LAN), a wide area network (WAN), and/or a public network, such as the Internet) via the network adapter 760. As shown, the network adapter 760 communicates with other modules of the electronic device 700 via the bus 730. It is to be noted that although not shown in the figures, other hardware and/or software modules may be used in conjunction with the electronic device 700, including, but not limited to: microcode, device drives, redundant processing units, external disk drive arrays, RAID systems, tape drives, and data backup storage systems.

By the foregoing description of embodiments, a person skilled in the art may easily understand that the example implementation described herein may be realized by software, or may be realized by software in combination with the necessary hardware. Thus, a technical solution according to the implementation of the present disclosure may be embodied in the form of a software product that may be stored in a non-volatile storage medium (which may be a CD-ROM, a USB flash drive, a removable hard drive, etc.) or on a network, and that includes a number of instructions for causing a computing device (which may be a personal computer, a server, a terminal device, or a network device, etc.) to perform the method according to the implementation of the present disclosure.

In an exemplary embodiment of the present disclosure, there is also provided a computer readable storage medium which may be a readable signal medium or a readable storage medium. The computer readable storage medium has stored thereon a program product which can implement the method described above in the present disclosure. In some possible implementations, various aspect of the present disclosure may also be implemented in the form of a program product including program codes which, when running on a terminal device or a cloud server, causes the terminal device or the cloud server to perform the steps according to various exemplary implementations of the present disclosure as described in the above-described 'exemplary methods' in the specification.

More specific examples of computer readable storage media in the present disclosure include, but not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In the present disclosure, the computer-readable storage medium may include a data signal propagated in a baseband or as part of a carrier in which readable program codes are carried. Such propagated data signals may take a variety of forms, including, but not limited to, electromagnetic signals, optical signals, or any suitable combination thereof. The readable signal medium may also be any readable medium other than the readable storage medium that may transmit, propagate, or transmit a program for use by or in conjunction with an instruction-executing system, device, or apparatus.

In some embodiments, the program code contained on the computer readable medium may be transmitted using any suitable medium, including, but not limited to: wireless, wire, optical cable, RF, or the like, or any suitable combination thereof.

During the specific implementation, the program code for performing the operations of the present disclosure may be written in any combination of one or more programming languages, including object-oriented programming languages - such as Java, C++ - and conventional procedural programming languages - such as the 'C' language or similar programming languages. The program code may be executed entirely on a user computing device, executed partially on the user device, executed as a stand-alone software package, executed partially on the user computing device and partially on a remote computing device, or executed entirely on a remote computing device or server. In the case of the remote computing device, the remote computing may be connected to the user computing device via any kind of network, including a local area network (LAN) or a wide area network (WAN), or may be connected to an external computing device (e.g., by using the Internet of an Internet service provider).

It is to be noted that although a number of modules or units of the device for action execution are mentioned in the detailed description above, such division is not mandatory. Indeed, according to an implementation of the present disclosure, the features and functions of two or more modules or units described above may be specified in a single module or unit. Conversely, the feature and function of one module or unit described above may be further divided to be specified by a plurality of modules or units.

Furthermore, although the various steps of the method in the present disclosure are described in the accompanying drawings in a particular order, it is not required or implied that the steps must be performed in that particular order or that all of the steps shown must be performed in order to achieve a desired result. Additionally or alternatively, certain steps may be omitted, a plurality of steps may be combined to be performed as a single step, and/or a single step may be broken down to be performed as a plurality of steps, and so on.

By the foregoing description of implementation, a person skilled in the art may easily understand that the example implementation described herein may be realized by software, or may be realized by software in combination with the necessary hardware. Thus, a technical solution according to the implementation of the present disclosure may be embodied in the form of a software product that may be stored in a non-volatile storage medium (which may be a CD-ROM, a USB flash drive, a removable hard drive, etc.) or on a network, and that includes a number of instructions for causing a computing device (which may be a personal computer, a server, a mobile terminal, or a network device, etc.) to perform the method according to the implementation of the present disclosure.

An embodiment of the present disclosure provides a computer program product including a computer program or computer instructions that, when being loaded and executed by a processor, cause a computer to implement any of the above visual image data processing methods.

A person skilled in the art may easily conceive of other implementations of the present disclosure upon consideration of the specification and practice of the invention. The present disclosure is intended to cover any variations, uses, or adaptations of the present disclosure that follow the general principles of the present disclosure and include the common knowledge or customary technical means in the art not disclosed by the present disclosure. The specification and embodiments are to be regarded as exemplary only, and the true scope of the present disclosure is indicated by the claims.

## Claims

1. A visual image data processing method, applied to a terminal device, comprising:
obtaining image feature information by performing feature extraction on an image in a captured video, generating an image feature code stream based on the image feature information, and sending the image feature code stream to a cloud server;
receiving location information sent by the cloud server, wherein the location information is generated by the cloud server based on the image feature code stream;
extracting an area image based on the location information; and
generating an image code stream based on the area image and sending the image code stream to the cloud server.

2. The visual image data processing method according to claim 1, wherein obtaining the image feature information by performing the feature extraction on the image in the captured video, generating the image feature code stream based on the image feature information, and sending the image feature code stream to the cloud server comprises:
generating the image feature information by performing the feature extraction on the image through a portion of layers of a first neural network mode; and
generating the image feature code stream by performing feature coding on the image feature information.

3. The visual image data processing method according to claim 1, wherein the cloud server generating the location information based on the image feature code stream comprises:
the cloud server obtaining a decoded image feature by decoding the image feature code stream; and
the cloud server outputting a first prediction result through a remaining portion of layers of a first neural network model by using the decoded image feature as an input, the first prediction result comprising a first predicted target category and the location information.

4. The visual image data processing method according to claim 1, further comprising, after generating the image code stream based on the area image and sending the image code stream to the cloud server:
receiving new location information, the new location information being comprised in a second prediction result, the second prediction result further comprising a second predicted target category preset, and the second prediction result being generated by the cloud server based on a decoded image through a second neural network model; and
extracting the area image based on the new location information, generating the image code stream based on the area image, and sending the image code stream to the cloud server.

5. The visual image data processing method according to claim 1, further comprising, after generating the image code stream based on the area image and sending the image code stream to the cloud server:
receiving a request for obtaining an original image sent by the cloud server, the original image comprising a to-be-detected target.

6. A visual image data processing method, applied to a cloud server, comprising:
receiving an image feature code stream sent by a terminal device, the image feature code stream being generated based on image feature information, the image feature information being obtained by the terminal device performing feature extraction on an image in a captured video;
generating location information based on the image feature code stream, and sending the location information to the terminal device; and
receiving an image code stream sent by the terminal device, the image code stream being generated by the terminal device based on an area image, and the area image being extracted by the terminal device based on the location information.

7. The visual image data processing method according to claim 6, wherein generating the location information based on the image feature code stream, and sending the location information to the terminal device comprises:
obtaining a decoded image feature by decoding the image feature code stream; and
outputting a first prediction result through a remaining portion of layers of a first neural network model by using the decoded image feature as an input, the first prediction result comprising a first predicted target category and the location information.

8. The visual image data processing method according to claim 7, wherein generating the location information based on the image feature code stream, and sending the location information to the terminal device comprises:
querying whether the first predicted target category comprises a first target category among N target categories preset in sequence, wherein N is a natural number;
if the first predicted target category does not comprise the first target category, ending; and
if the first predicted target category comprises the first target category, sending the location information to the terminal device.

9. The visual image data processing method according to claim 6, further comprising, after receiving the image code stream sent by the terminal device:
determining whether the area image comprises a to-be-detected target based on the image code stream.

10. The visual image data processing method according to claim 9, wherein determining whether the area image comprises the to-be-detected target based on the image code stream comprises:
obtaining a decoded image by decoding the image code stream;
outputting a second prediction result through a second neural network model by using the decoded image as an input, the second prediction result comprising a second predicted target category and new location information;
determining whether the second predicted target category comprises an M^{th} target category among N target categories preset in sequence, where M is a number of times the second predicted target category is generated plus 1, and M is not greater than N;
if the second predicted target category comprises the M^{th} target category, determining whether the second predicted target category is the same as the M^{th} target category; and
if the second predicted target category does not comprise the M^{th} target category, ending.

11. The visual image data processing method according to claim 10, wherein determining whether the second predicted target category is the same as the M^{th} target category comprises:
if the second predicted target category is the same as the M^{th} target category, determining whether the second predicted target category is the same as the to-be-detected target,
if the second predicted target category is the same as the to-be-detected target, outputting an indication indicating that the to-be-detected target has been found, and
if the second predicted target category is different from the to-be-detected target, ending; and
if the second predicted target category is different from the M^{th} target category, sending the new location information to the terminal device to enable the terminal device to extract the area image based on the new location information.

12. The visual image data processing method according to claim 11, further comprising:
if the second predicted target category is the same as the to-be-detected target, sending a request for obtaining an original image to the terminal device.

13. A machine visual image data processing device, applied to a terminal device, comprising:
a feature extracting and coding module, configured to obtain image feature information by performing feature extraction on an image in a captured video, generate an image feature code stream based on the image feature information, and send the image feature code stream to a cloud server;
a terminal receiving module, configured to receive location information sent by the cloud server, wherein the location information is generated by the cloud server based on the image feature code stream;
an image extracting module, configured to extract an area image based on the location information; and
a processing module, configured to generate an image code stream based on the area image and send the image code stream to the cloud server.

14. A machine visual image data processing device, applied to a cloud server, comprising:
a cloud receiving module, configured to receive an image feature code stream sent by a terminal device, the image feature code stream being generated based on image feature information, the image feature information being obtained by the terminal device performing feature extraction on an image in a captured video; and
a location generating module, configured to generate location information based on the image feature code stream, and send the location information to the terminal device,
wherein the cloud receiving module is further configured to receive an image code stream sent by the terminal device, the image code stream being generated by the terminal device based on an area image, and the area image being extracted by the terminal device based on the location information.

15. An electronic device comprising:
a processor; and
a memory, storing executable instructions of the processor,
wherein the processor is configured to perform the visual image data processing method according to any one of claims 1 to 12 by executing the executable instructions.

16. A computer-readable storage medium having stored thereon a computer program that, when being executed by a processor, implements the visual image data processing method according to any one of claims 1 to 12.

17. A computer program product comprising a computer program that, when being executed by a processor, implements the visual image data processing method according to any one of claims 1 to 12.
